# EUROPÄISCHE PATENTSCHRIFT

(11) **EP 1 720 749 B1**
(45) Veröffentlichungstag und Bekanntmachung des Hinweises auf die Patenterteilung: **14.04.2010**
(21) Anmeldenummer: 05716686.0
(22) Anmeldetag: 14.02.2005
(51) Int. Cl.: B60S 1/34

(54) **WISCHERARM FÜR EINE SCHEIBENWISCHVORRICHTUNG**
WIPER ARM FOR A WINDOW WIPING DEVICE
BRAS DE DISPOSITIF D'ESSUIE-GLACE

(30) Priorität: 20.02.2004 DE 102004008331
(43) Veröffentlichungstag der Anmeldung: 15.11.2006
(73) Patentinhaber: ROBERT BOSCH GMBH, 70442 Stuttgart (DE)
(72) Erfinder: LORENZ, Karlheinz, 76534 Baden-Baden (DE); REISER, Christian, 76275 Ettlingen (DE)
(86) Internationale Anmeldenummer: PCT/EP2005/050634
(87) Internationale Veröffentlichungsnummer: WO 2005/080159

(56) Entgegenhaltungen:
- EP-A- 0 289 658
- FR-A- 1 423 511
- US-A- 4 050 832
- US-A- 5 423 106
- US-A1- 2003 101 530
- US-B1- 6 394 688

## Beschreibung

### Stand der Technik

Die Erfindung betrifft einen Wischerarm für eine Scheibenwischvorrichtung, insbesondere für ein Kraftfahrzeug, nach Gattung des unabhängigen Anspruchs.

Es sind schon zahlreiche Wischerarme für Scheibenwischvorrichtungen für Kraftfahrzeuge bekannt. Diese weisen üblicherweise ein Befestigungsteil auf, das zur Befestigung des Wischerarms an einer Wischerwelle der Scheibenwischvorrichtung des Kraftfahrzeugs dient und im Betrieb eine pendelnde Bewegung vollführt. An dieses Befestigungsteil ist ein Gelenkteil angelenkt, so dass sich das Gelenkteil in einer zur Ebene der Pendelbewegung senkrechten Ebene bewegen lässt. Zwischen Gelenkteil und Befestigungsteil ist ein Federelement vorgesehen, das eine Zugfeder umfasst, die bei einer Relativbewegung zwischen dem Befestigungsteil und dem Gelenkteil beansprucht wird. Das Federelement dient in erster Linie dazu, das am freien Ende des Gelenkteils befestigte Wischblatt, auf die Scheibe des Kraftfahrzeugs zu drücken und damit die notwendige Anpresskraft für das Wischblatt zu erzeugen. Die Zugfeder ist durch ein Befestigungsmittel mit dem Befestigungsteil verbunden, das üblicherweise als C-förmiger Bügel ausgebildet ist, der auf der einen Seite in die Zugfeder und auf der anderen Seite in einen Bolzen im Befestigungsteil eingehakt ist.

Bei modernen Scheibenwischvorrichtungen ist es erforderlich, dass der Wischerarm möglichst flach ausgebildet ist und - insbesondere bei der Verwendung von sogenannten gelenkfreien Wischblättern - sehr nah an der Windschutzscheibe des Kraftfahrzeugs angeordnet ist. Darüber hinaus sind diese Eigenschaften wünschenswert, um einen möglichst großen Abstand zwischen der Motorhaube des Kraftfahrzeugs und dem Wischerarm zu erzielen. Im Falle eines auf die Motorhaube aufprallenden Fußgängers wird daher oft ein Mindestabstand zwischen Motorhaube und Wischerarm gefordert, so dass die Motorhaube beim Aufprall unter Energieaufnahme zurückweichen kann, um die Verletzungsgefahr des Fußgängers zu vermindern.

Gattungsgemäße Wischerarme mit einem Befestigungsmittel zur Befestigung einer Zugfeder sind in US 6,394,688 B1, US 4,050,832, und FR 1 423 511 offenbart. Weitere bekannte Wischerarme sind in EP 0 289 658 A2, US 5,423,106 und US 2003/0101530 A1 offenbart.

Es ist Aufgabe der Erfindung, einen Wischerarm für eine Scheibenwischvorrichtung bereitzustellen, der kompakt ausgebildet ist und ein zuverlässiges Ab- und Zurückklappen eines Gelenkteils ermöglicht.

Diese Aufgabe wird durch einen Wischerarm gemäß Anspruch 1 gelöst. Weitere vorteilhafte Ausführungsformen sind in den abhängigen Ansprüchen angegeben.

Der erfindungsgemäße Wischerarm mit den Merkmalen des Hauptanspruchs hat den Vorteil, dass dieser wesentlich flacher, als die bisher bekannten Wischerarme ausgebildet werden kann. Dies wird dadurch erzielt, dass das Befestigungsmittel eine U-förmige Biegung aufweist, die in einer Ebene verläuft, die senkrecht zur Ebene der Biegung der bisherigen Befestigungsmittel verläuft. Damit verläuft die Biegung in einer zur Bewegungsebene des Gelenkteils senkrechten Ebene, so dass das Befestigungsmittel nur wenig über die Unterkanten des Befestigungsteils und des Gelenkteils hinausragt.

Die U-förmige Biegung weist eine Basis und zwei Schenkel auf, die an ihren der Basis abgewandten freien Enden weitere gegenüberliegende Biegungen aufweisen. Durch die weitere gegenüberliegende Biegungen kann das Befestigungsmittel in einfacher Weise am Befestigungsteil befestigt werden.

Besonders vorteilhaft ist es hierbei, wenn das Befestigungsteil eine Aussparung aufweist, in die die weitere Biegung eingreift, um auf ein separates Befestigungselement im Befestigungsteil, wie beispielsweise einen Bolzen, verzichten zu können.

Noch flacher kann der Wischerarm vorteilhafter Weise dadurch ausgebildet werden, dass die Verbindung des Befestigungsteils mit dem Gelenkteil durch ein Gelenk mit einem Gelenkbolzen realisiert ist und der Gelenkbolzen im Bereich des Befestigungsmittels einen Einstich aufweist.

Hierbei ist es besonders vorteilhaft, wenn der Einstich radial umlaufend ausgebildet ist. Besonders einfach und kostengünstig lässt sich der Wischerarm durch ein Befestigungsmittel aus Runddraht ausbilden.

### Zeichnungen

Ein Ausführungsbeispiel der Erfindung ist in der Zeichnung dargestellt und in der nachfolgenden Beschreibung näher erläutert.

Es zeigen
- Figur 1: einen erfindungsgemäßen Wischerarm in einer perspektivischen Darstellung,
- Figur 2: eine perspektivische Darstellung des Gelenks des Befestigungsteils und das Befestigungsmittel im Detail,
- Figur 3: das Gelenk mit dem Befestigungsmittel und der Zugfeder in einer Seitenansicht
- Figur 4: das Befestigungsmittel sowie den Gelenkbolzen eines erfindungsgemäßen Wischerarms im Detail.

### Beschreibung des Ausführungsbeispiels

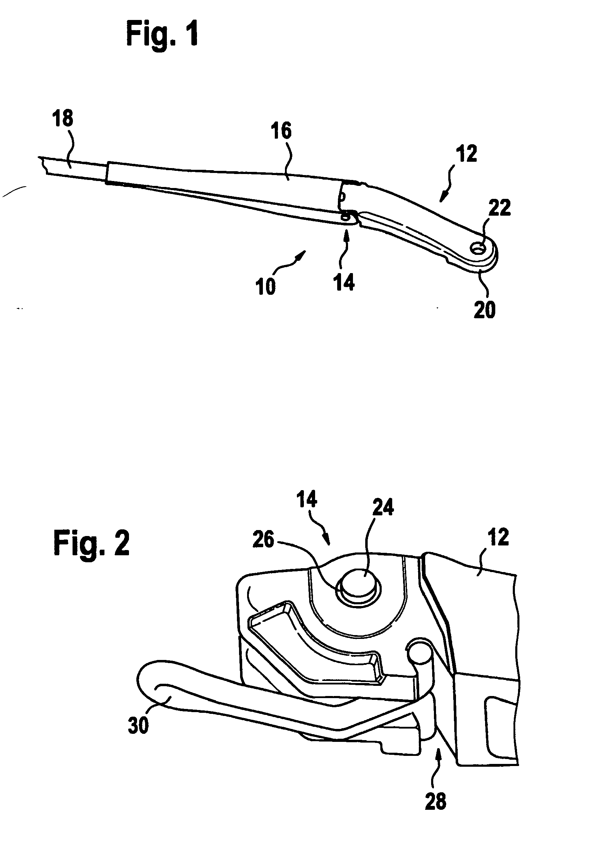

In Figur 1 ist ein erfindungsgemäßer Wischerarm 10 in einer perspektivischen. Darstellung gezeigt. Dieser umfasst im Wesentlichen ein Befestigungssteil 12, das mittels eines Gelenks 14 mit einem Gelenkteil 16 gelenkig verbunden ist. An seinem freien Ende weist das Gelenkteil 16 an seinem freien Ende eine Stange 18 auf, die ein Wischblatt, das hier aus Übersichtlichkeitsgründen nicht gezeichnet ist, zu tragen vermag. Natürlich kann das Wischblatt auch direkt an das freie Ende des Gelenkteils 16 angelenkt sein.

Das Gelenkteil 16 ist als Stanz-Biege-Teil als Blech ausgebildet und besitzt im Querschnitt eine im wesentlichen umgekehrt U-förmige Gestalt. Das Befestigungsteil 12 ist von länglicher Gestalt und weist ein erstes Ende 20 mit einer Befestigungsöffnung 22 auf, die der Befestigung des Befestigungsteils 12 an einer hier nicht gezeichneten Wischerwelle einer Schebenwischvorrichtung dient. Am anderen Ende seiner Längserstreckung ist das Befestigungsteil 12 durch das Gelenk 14 mit dem Gelenkteil 16 gelenkig verbunden, so dass das Gelenkteil 16 in Bezug auf das Befestigungsteil 12 in einer ersten Ebene klappbar ist. Im Betrieb pendelt der Wischerarm 10 in einer zur ersten Ebene senkrechten zweiten Ebene.

In Figur 2 ist das Befestigungsteil 12 im Bereich des Gelenks 14 eines erfmdungsgemäßen Wischerarms 10 im Detail gezeigt. Das Befestigungsteil 12 ist als Gussteil ausgebildet und weist an seinem Ende einen Gelenkbolzen 24 auf, der der gelenkigen Verbindung mit dem Gelenkteil 16 dient. Der Gelenkbolzen 24 ist teilweise in einer Hülse 26 gelagert, in das Befestigungsteil 12 eingesetzt und durchgreift dieses in seiner gesamten Breite. An seinen Enden durchgreift der Gelenkbolzen 24 auch die Wände des U-förmigen Gelenkteils 16, die sich um das Befestigungsteil 12 schmiegen, und dient so als Gelenkachse zwischen Gelenkteil 16 und Befestigungsteil 12.

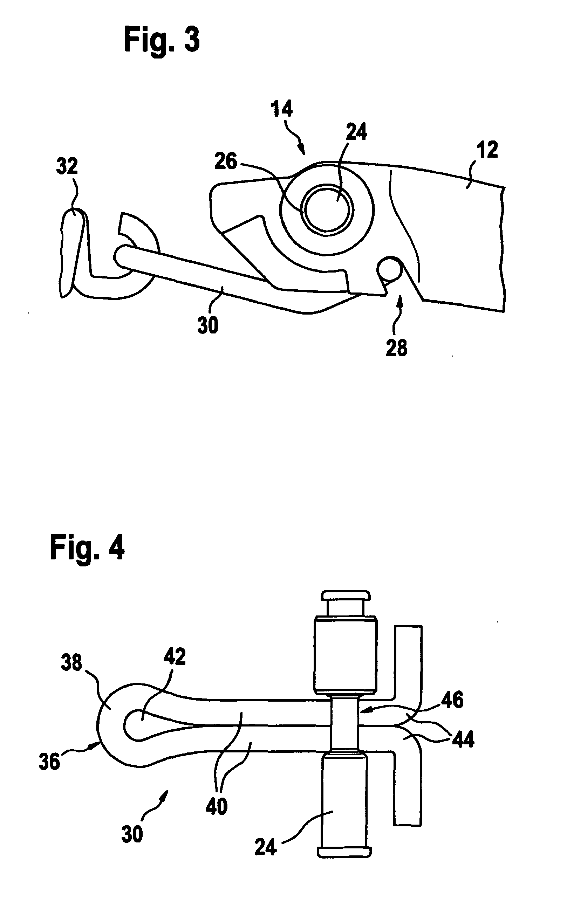

An einer Unterseite, die in montierter Lage der Scheibe des Kraftfahrzeugs zugewandt ist, weist das Befestigungsteil 12 eine Aussparung 28 auf, die als Querschlitz ausgebildet ist, der das Befestigungsteil 12 im Bereich hinter dem Gelenkbolzen 24 in seiner vollen Breite durchgreift. Der Querschlitz 28 ist hierbei in Richtung des Gelenkteils 16 etwas geneigt. In dieser Aussparung 28 sitzt ein Befestigungsmittel 30, das zusammen mit einer Zugfeder 32 (Figur 3) ein Federelement 34 bildet. Das Federelement ist zwischen dem Gelenkteil 16 und dem Befestigungsteil 12 gespannt, so dass beim Abklappen des Gelenkteils 16 vom Befestigungsteil 12 die Zugfeder 32 beansprucht wird. Das Federelement 34 dient im Betrieb dazu, dass das am freien Ende der Stange 18 angelenkte Wischblatt im.Betrieb ständig auf die Scheibe des Kraftfahrzeugs gedruckt wird.

Das Befestigungsmittel 30 ist von im Längsschnitt länglicher Gestalt und weist in Höhe des Gelenkbolzens 24 einen leichten Knick auf. Dieser dient dazu, dass beim Wechseln des Wischblatts, wenn das Gelenkteil 16 vom Befestigungsteil 12 abgeklappt und die Zugfeder 32 gespannt wird, ein größerer Abklappwinkel ermöglicht wird, da der Gelenkbolzen 24 ansonsten am Befestigungsmittel 30 anschlagen würde.

In Figur 4 ist das Befestigungsmittel 30 sowie der Gelenkbolzen 24 mit der Hülse 26 im Detail dargestellt. Das Befestigungsmittel 30 weist eine U-förmige Biegung 36 mit einer runden Basis 38 und zwei Schenkeln 40 auf. Die Schenkel 40 sind direkt nebeneinander angeordnet, so dass im Bereich der Biegung 36 eine Öse 42 entsteht, in die das eine Ende der Zugfeder 32 eingehakt werden kann. An den beiden freien, der Basis 38 abgewandten Enden der Schenkel 40 sind diese jeweils gegenüberliegend um 90 Grad in der selben Ebene wie die Biegung 36, als weitere Biegung 44 abgebogen. Auf diese Weise entsteht durch die beiden freien Enden der Schenkel 40, die gegenüberliegend abgebogen sind, eine zum Gelenkbolzen 24 etwa parallel angeordnete Stange, die in die Aussparung 28 (Figur 2) eingesetzt wird. Um den Bewegungsbereich des Befestigungsmittels 30 zu vergrößern, weist der Gelenkbolzen 24 einen radial umlaufenden Einstich 46 auf, so dass der Gelenkbolzen 24 im Bereich des Befestigungsmittels 30 einen etwas kleineren Durchmesser aufweist. Das Befestigungsmittel ist hierbei aus einem Runddraht ausgebildet, der einen runden Querschnitt aufweist.

In einer Variation der Erfindung kann das Befestigungsteil 12 auch als Blechbiegeteil ausgebildet sein, welches mit geeigneten Laschen zur Aufnahme der freien Enden des Befestigungsmittels 30 versehen ist. Ebenso können die freien Enden des Befestigungsmittels 30 auch in einer anderen Richtung, als der hier gezeigten, gebogen sein. Entscheidend ist nur, dass die freien Enden der beiden Schenkel 40 des Befestigungsmittels 30 in eine Aussparung des Befestigungsteils 12 einzugreifen vermögen.

## Patentansprüche

1. Wischerarm (10) für eine Scheibenwischvorrichtung, insbesondere für ein Kraftfahrzeug, mindestens umfassend:
- ein Befestigungsteil (12) zur Befestigung des Wischerarms (10) an der Scheibenwischvorrichtung,
- ein Gelenkteil (16), das gelenkig mit dem Befestigungsteil (12) verbunden ist, so dass es in einer ersten Ebene bewegbar ist,
- ein Federelement, das zwischen dem Befestigungsteil (12) und dem Gelenkteil (16) angeordnet ist und eine Zugfeder (32) aufweist, die bei einer Relativbewegung zwischen Befestigungsteil (12) und Gelenkteil (16) beansprucht ist,
- ein Befestigungsmittel (30), das die Zugfeder (32) mit dem Befestigungsteil (12) verbindet,
- wobei das Befestigungsmittel (30) eine U-förmige Biegung (36) in einer zur ersten Ebene senkrechten zweiten Ebene aufweist,
- wobei die U-förmige Biegung (36) eine Basis (38) und zwei Schenkel (40) aufweist,
**dadurch gekennzeichnet, dass**
- die Schenkel (40) in einem an die U-förmige Biegung (36) angrenzenden Teilabschnitt direkt nebeneinander angeordnet sind, so dass im Bereich der U-förmigen Biegung (36) eine Öse zum Einhaken eines Endes der Zugfeder (32) entsteht, und dass die Schenkel (40) angrenzend an den Teilabschnitt Enden aufweisen, an welchen die Schenkel (40) jeweils gegenüberliegend als weitere Biegung (44) abgebogen sind.

2. Wischerarm nach Anspruch 1, **dadurch gekennzeichnet, dass** die Schenkel (40) an den Enden um 90° abgebogen sind.

3. Wischerarm nach einem der vorhergehenden Ansprüche, **dadurch gekennzeichnet, dass** die weitere Biegung (44) in eine im Befestigungsteil (12) angeordnete Aussparung (28) eingreift.

4. Wischerarm nach Anspruch 3, **dadurch gekennzeichnet, dass** die Aussparung (28) als Querschlitz ausgebildet ist, welcher das Befestigungsteil (12) in seiner vollen Breite durchgreift.

5. Wischerarm nach Anspruch 3, **dadurch gekennzeichnet, dass** die Aussparung (28) geneigt in Richtung des Gelenkteils (16) ausgebildet ist.

6. Wischerarm (10) nach einem der vorhergehende Ansprüche, **dadurch gekennzeichnet, dass** zur gelenkigen Verbindung des Befestigungsteils (12) mit dem Gelenkteil (16) ein Gelenk (14) vorgesehen ist, das einen Gelenkbolzen (24) aufweist, der im Bereich des Befestigungsmittels (30) einen Einstich (46) aufweist.

7. Wischerarm (10) nach Anspruch 6, **dadurch gekennzeichnet, dass** der Einstich (46) radial umlaufend ausgebildet ist.

8. Wischerarm (10) nach einem der vorhergehenden Ansprüche, **dadurch** gegenzeichnet, dass das Befestigungsmittel (30) aus Runddraht ausgebildet ist.

## Claims

1. Wiper arm (10) for a window wiping device, in particular for a motor vehicle, at least comprising:
- a fastening part (12) for fastening the wiper arm (10) to the window wiping device,
- a joint part (16) which is articulatedly connected to the fastening part (12) so as to be movable in a first plane,
- a spring element which is arranged between the fastening part (12) and the joint part (16) and which has a tension spring (32) which is loaded in the event of a relative movement between the fastening part (12) and joint part (16),
- a fastening means (30) which connects the tension spring (32) to the fastening part (12),
- with the fastening means (30) having a U-shaped bend (36) in a second plane which is perpendicular to the first plane,
- with the U-shaped bend (36) having a base (38) and two limbs (40),
**characterized in that**
- the limbs (40) are arranged directly adjacent to one another in a partial section adjoining the U-shaped bend (36), such that an eye for hooking in one end of the tension spring (32) is formed in the region of the U-shaped bend (36), and **in that** the limbs (40) have, adjoining the partial section, ends at which the limbs (40) are bent in each case oppositely as a further bend (44).

2. Wiper arm according to Claim 1, **characterized in that** the limbs (40) are bent through 90° at the ends.

3. Wiper arm according to one of the preceding claims, **characterized in that** the further bend (44) engages into a cutout (28) arranged in the fastening part (12).

4. Wiper arm according to Claim 3, **characterized in that** the cutout (28) is formed as a transverse slot which extends through the fastening part (12) over the full width of the latter.

5. Wiper arm according to Claim 3, **characterized in that** the cutout (28) is formed so as to be inclined in the direction of the joint part (16).

6. Wiper arm (10) according to one of the preceding claims, **characterized in that**, for the articulated connection of the fastening part (12) to the joint part (16), a joint (14) is provided which has a joint pin (24) which, in the region of the fastening means (30), has a recess (46).

7. Wiper arm (10) according to Claim 6, **characterized in that** the recess (46) is of radially encircling design.

8. Wiper arm (10) according to one of the preceding claims, **characterized in that** the fastening means (30) is formed as a round wire.

## Revendications

1. Bras d'essuie-glace (10) pour un dispositif d'essuie-glace, notamment pour un véhicule automobile, comprenant au moines :
- une partie de fixation (12) pour la fixation du bras d'essuie-glace (10) au dispositif d'essuie-glace,
- une partie d'articulation (16) qui est connectée de manière articulée à la partie de fixation (12), de sorte qu'elle puisse être déplacée dans un premier plan,
- un élément de ressort, qui est disposé entre la partie de fixation (12) et la partie d'articulation (16), et qui présente un ressort de traction (32), qui est sollicité dans le cas d'un déplacement relatif entre la partie de fixation (12) et la partie articulée (16),
- un moyen de fixation (30), qui relie le ressort de traction (32) à la partie de fixation (12),
- le moyen de fixation (30) présentant une courbure en forme de U (36) dans un deuxième plan perpendiculaire au premier plan,
- la courbure en forme de U (36) présentant une base (38) et deux branches (40),
**caractérisé en ce que**
- les branches (40) sont disposées directement l'une à côté de l'autre dans une portion partielle adjacente à la courbure en forme de U (36), de sorte que dans la région de la courbure en forme de U (36) soit formé un oeillet pour accrocher une extrémité du ressort de traction (32), et **en ce que** les branches (40) présente à côté de la portion partielle des extrémités au niveau desquelles les branches (40) sont cintrées à chaque fois à l'opposé sous forme de courbure supplémentaire (44).

2. Bras d'essuie-glace selon la revendication 1, **caractérisé en ce que** les branches (40) sont cintrées de 90° au niveau des extrémités.

3. Bras d'essuie-glace selon l'une quelconque des revendications précédentes, **caractérisé en ce que** la courbure supplémentaire (44) vient en prise dans un évidement (28) disposé dans une partie de fixation (12).

4. Bras d'essuie-glace selon la revendication 3, **caractérisé en ce que** l'évidement (28) est réalisé sous forme de fente transversale qui vient en prise à travers la partie de fixation (12) sur toute sa largeur.

5. Bras d'essuie-glace selon la revendication 3, **caractérisé en ce que** l'évidement (28) est réalisé sous forme inclinée dans la direction de la partie d'articulation (16).

6. Bras d'essuie-glace (10) selon l'une quelconque des revendications précédentes, **caractérisé en ce que** pour la connexion articulée de la partie de fixation (12) à la partie d'articulation (16), on prévoit une articulation (14), qui présente un boulon d'articulation (24), qui présente une encoche (46) dans la région du moyen de fixation (30).

7. Bras d'essuie-glace (10) selon la revendication 6, **caractérisé en ce que** l'encoche (46) est réalisée sous forme radialement périphérique.

8. Bras d'essuie-glace (10) selon l'une quelconque des revendications précédentes, **caractérisé en ce que** le moyen de fixation (30) est réalisé sous forme de fil métallique rond.
